# EUROPÄISCHE PATENTANMELDUNG

(11) **EP 1 080 818 A2**
(43) Veröffentlichungstag der Anmeldung: **07.03.2001**
(21) Anmeldenummer: 00116939.0
(22) Anmeldetag: 07.08.2000
(51) Int. Cl.: B23K 9/133

(54) **Verfahren zur Steuerung der Drahtzufuhrbewegung für WIG-Schweissgeräte und Vorrichtung zur Durchführung des Verfahrens**

(30) Priorität: 01.09.1999 AT 59499 U
(71) Anmelder: Plasch, Siegfred, Ing., 4600 Wels (AT)
(72) Erfinder: Plasch, Siegfred, Ing., 4600 Wels (AT)
(74) Vertreter: Schön, Theodor, Patent- und Zivilingenieur

(57) **Zusammenfassung**

Die vorliegende Erfindung betrifft ein Verfahren zur Steuerung der Drahtzufuhrbewegung eines Schweißdrahtes für das WIG-Schweißverfahren mit einem automatischen Drahtvortrieb, bei dem die Vortriebseinrichtung (3) für die automatische Schweißdrahtzuführung in eine lineare Vor-Zurück-Bewegung versetzt wird, während gleichzeitig durch die Vortriebseinrichtung (3) eine kontinuierliche Vorschubbewegung des Schweißdrahtes (1) erfolgt, wodurch der Schweißdraht (1) in eine Pendelhubbewegung versetzt wird. Weiters betrifft sie eine Vorrichtung zur Durchführung dieses Verfahrens, bei der das Gehäuse (5), in dem die Drahtvorschubeinrichtung (3) fixiert ist, und der Antriebsmotor der Drahtvorschubeinrichtung (3) unbeweglich auf einem Führungsschlitten (6) befestigt sind, wobei ein separater Getriebemotor (12) über eine Exzenterscheibe (13) und eine Antriebsstange (10) den Führungsschlitten (6) in eine lineare Vor-Zurück-Bewegung versetzt.

## Beschreibung

Die vorliegende Erfindung betrifft ein Verfahren zur Steuerung der Drahtzufuhrbewegung eines Schweißdrahtes für die WIG-Handschweißung und die WIG-Automatenschweißung

Beim WIG-Schweißen (= Wolfram Inert Gas Schweißen) kommt der gleichmäßigen Zuführung des Zusatzmaterials, beim WIG-Handschweißen sind es Stäbe mit 1000mm Länge, sehr große Bedeutung zu, da sie unmittelbare Auswirkung auf die Qualität der Schweißnaht hat.

Das WIGSchweißverfahren wird deswegen bevorzugt bei Schweißungen eingesetzt, wo hohe Anforderungen an die Schweißnahtqualität (wie etwa bei Röntgennähten, Dichtnähten oder Wurzelschweißungen), sowie auch gutes Aussehen der Schweißnaht gefordert wird.Die Qualität der Schweißnaht beruht in erster Linie auf dem handwerklichen Können und der Erfahrung des WIG-Schweißers.

Um das Können des Schweißers positiv zu unterstützen und die WIG-Schweißung einhändig durchführen zu können, wurden in den letzten Jahren Vorrichtungen entwickelt, bei denen die Zuführung des Schweißdrahtes automatisiert erfolgt. Ein Beispiel einer solchen Entwicklung ist in der EP-A1 803 309 beschrieben.

Eine alternative Entwicklung befaßt sich mit der pulsierenden Zuführung des Drahtes, welche einer Zufuhr-Stopp-Bewegung entspricht. Diese Entwicklung kommt noch am ehesten der händischen Zuführung des Schweißdrahtes nahe. Im Vergleich zur kontinuierlichen Drahtzuführung ist hier jedoch eine geringere Abschmelzleistung möglich, d.h. die Herstellung einer bestimmten Schweißnaht dauert zwangsläufig länger. Für die händische Schweißung ist diese Methode eher von Nachteil, weshalb sie in der Praxis nur für Schweißautomaten breite Verwendung gefunden hat.

Beiden Entwicklungen ist gemein, daß die Schweißnaht aus einer Aneinanderreihung von Einzeltropfen des geschmolzenen Schweißdrahtes besteht. Die Qualität der Schweißnaht ergibt sich aus der Gleichmäßigkeit der Überlappung der Tropfen, welche wiederum unmittelbar vom Geschick des Schweißers abhängig ist.

Die vorliegende Erfindung stellt sich die Aufgabe, durch gesteuerte automatisierte Zuführung des Schweißdrahtes auch bei geringerer Fertigkeit des Schweißers eine höhere Schweißnahtqualität zu erreichen und gleichzeitig den Zeitaufwand für die Herstellung der Schweißnaht wesentlich zu verringern.

Diese Aufgabe wird dadurch gelöst, daß die Drahtzufuhrbewegung eine lineare Vor-Zurück-Bewegung (Pendelhubbewegung) vollzieht, die der Charakteristik der Materialzugabe des Handschweißers nachempfunden ist. Diese Art der Bewegung wird dadurch hervorgerufen, daß die Vortriebseinrichtung (4-Rollen-Drahtvorschub) für die automatische Schweißdrahtzuführung in eine lineare Vor-Zurück-Bewegung (Pendelhub) versetzt wird und eine gleichzeitige Vorschubbewegung des Drahtes erfolgt.

Dazu wird die Vortriebseinrichtung mit integriertem Antriebsmotor direkt auf einem Hubschlitten montiert. Der Hubschlitten besteht bevorzugt aus einem Hochleistungskunststoff und wird von einem separaten Excentermotor angetrieben. Der kontinuierlich vorgetriebene Schweißdraht führt so zusätzlich eine Pendelhubbewegung aus.

Selbstverständlich können sowohl die Frequenz der Pentelhubbewegung als auch die Vortriebsgeschwindigkeit unabhängig voneinander in festgelegten Bereichen verstellt werden. Der Frequenzbereich der Pendelhubbewegung liegt zwischen 100 und 1000 pro Minute. Die Vortriebsgeschwindigkeit liegt im Bereich von 0,5 bis 7 Meter pro Minute.

Die Zuführung des Schweißdrahtes erfolgt durch das Brennerschlauchpaket bis etwa in die Mitte des Handgriffes, wird dann an der Unterseite des Handgriffes herausgeführt und über eine speziell ausgeführte Zuführungseinrichtung zur Schweißposition gebracht.

Eine weitere Erhöhung der Schweißnahtqualität wird dadurch erreicht, daß der Schweißdraht über eine Zuführungseinrichtung austritt, wobei die Austrittsöffnung des Drahtes keine zentrische Bohrung hat, sondern geringfügig seitlich versetzt ist und die Austrittsöffnung um 45° abgeschrägt ist.

Durch diese Maßnahmen wird dem austretenden Schweißdraht eine zusätzliche Pendelbewegung aufgezwungen, Durch die Überlagerung dieser Pendelbewegung mit der Pendelhubbewegung des Vortriebs wird die Spitze des Schweißdrahtes in eine eliptische Rotation versetzt und damit eine Rotationsbewegung des Schweißbades erreicht.

Die wesentlchen Merkmale dieser Rotation des Schweißbades sind eine gringfügig breitere, aber flachere Schweißnaht, eine bessere Flankenbenetzbarkeit, wodurch Bindefehler unterbunden werden, eine höhere Schweißgeschwindigkeit, eine Verbesserung der Nahtqualität und eine wesentliche Verbesserung des optischen Erscheinungsbildes der Schweißnaht, welche ein feinschuppiges Aussehen von kontinuierlicher Gleichmäßigkeit hat.

Es werden sowohl die mechanischen als auch die metallurgischen Werte in der Schweißnaht und in der Wärmeeinflußzone des Schweißgutes erheblich verbessert. Die Abschmelzleistung, d.i. die Menge an Schweißdraht, welche pro Zeiteinheit eingebracht wird, wird um etwa 100 % erhöht, wobei die Schweißung in allen Schweißpositionen - auch über Kopf - wesentlich einfacher ausgeführt werden kann.

Eine weitere Erhöhung der Abschmelzleistung ohne negativem Einfluß auf die Schweißnahtqualität wird dadurch erreicht, daß der Schweißdraht in der Zuführung mittels einer weiteren Stromquelle vorgewärmt wird (Heißdrahtverfahren). Die so erreichbare Abschmelzleistung beträgt gegenüber der Kaltdrahtschweißung etwa 150 %.

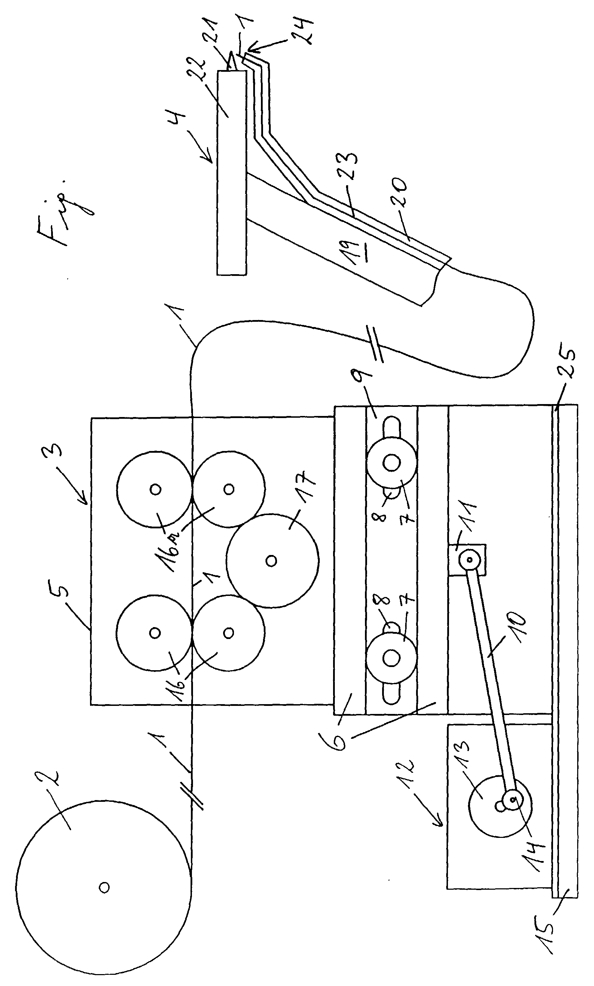

Die erfindungsgemäße Vorrichtung ist in der Figur dargestellt. Hierin wird der Schweißdraht 1 von der Drahtspule 2 über eine Drahtvorschubeinrichtung 3 kontinuierlich einem WIG-Schweißbrenner 4 zugeführt. Dieser kann sowohl von Hand geführt oder auf einer Vorrichtung aufgebaut sein.

Die Drahtvorschubeinrichtung 3 besteht aus einem Gehäuse 5, welches unbeweglich verbunden ist mit einem Führungsschlitten 6, der bevorzugt aus einem Hochleistungskunststoff besteht. Der Führungsschlitten 6 ist auf Rollen 7 gelagert, welche entlang von schlitzförmigen Ausnehmungen 8 des partiell dargestellten Führungsschlittengehäuses 9 frei bewegbar gehalten sind.

Diese schlitzförmigen Ausnehmungen verlaufen parallel zur Vortriebsrichtung des Schweißdrahtes. Am Führungsschlitten 6 greift eine Antriebsstange 10 über eine Halterung 11 an, welche mit dem Führungsschlitten 6 fest verbunden ist. Die am Getriebemotor 12 fixierte Exzenterscheibe 13 versetzt die Antriebsstange 10 in eine exzemtrisch rotierende Bewegung und diese Bewegung wird durch die Halterung 11 auf den Führungsschlitten 6 übertragen. Durch die Lagerung auf den Rollen 7 vollzieht der Führungsschlitten 6 eine lineare Vor-Zurück-Bewegung parallel zur Vortriebsrichtung des Schweißdrahtes.

Der Angriffspunkt 14 der Antriebsstange 10 an der Exzenterscheibe 13 kann in einem Bereich von 0,5 bis 10 Millimeter, bevorzugt in einem Bereich von 2 bis 6 Millimeter vom Scheibenmittelpunkt versetzt angeordnet werden. Dadurch ist eine variable Einstellung des Pendelhubes des Führungsschlitten 6 gewährleistet. Der Getriebemotor 12 und das Führungsschlittengehäuse 9 befinden sich auf einer gemeinsamen Befestigungsplatte 25, wobei unter der Befestigungsplatte 25 eine Schwingungsdämpfungsplatte 15 angeordnet ist.

Die Drahtvorschubeinrichtung 3 weist zwei Vorschubrollenpaare 16, 16a auf, welche von einer Antriebsrolle 17 in eine Drehbewegung versetzt werden, wodurch der Schweißdraht 1 mit gleichbleibender Geschwindigkeit zum WIG-Schweißbrenner 4 befördert wird. Die Antriebsrolle 17 wird von einem hier nicht ersichtlichen, fest an der Drahtvorschubeinrichtung montierten Antriebsmotor angetrieben.

Der WIG-Schweißbrenner 4 besteht aus einem Handgriff 19 mit einem hier nicht dargestellten integrierten Betätigungsschalter für das Steuern des Drahtvorschubes und dem Ein-Ausschalter der Schweißanlage. Durch den Handgriff 19 führt die Drahtzufuhrleitung 20, eine nicht näher dargestellte Innertgaszufuhrleitung und eine ebenfalls nicht dargestellte Kühlwasserleitung, sowie die Stromleitung für den Brennerkörper 22. Die Wolframelektrode 21 ist im Brennerkörper 22 integriert.

Die Drahtzufuhrleitung 20 weist eine Bohrung 23 auf, durch welche der Schweißdraht 1 zur Schweißstelle geführt wird. Die Austrittsöffnung 24 liegt nicht exakt im Zentrum der Drahtzufuhrleitung 20, sondern ist um 0,5 bis 2 Millimeter, bevorzugt um 1,25 Millimeter vom Mittelpunkt verschoben. Dadurch führt der Schweißdraht 1 unmittelbar nach seinem Austritt 24 aus der Drahtzufuhrleitung 20 eine weitere, quer zur Austrittsrichtung gerichtete Pendelbewegung aus.

In einer besonders bevorzugten, hier nicht dargestellten Ausführungsform wird dieser Effekt noch verstärkt, indem die Austrittsöffnung 24 gegen die Achse der Zufuhrleitung 20 um einen Winkel von 30° bis 60°, insbesondere bevorzugt um 45° abgeschrägt ist.

## Patentansprüche

1. Verfahren zur Steuerung der Drahtzufuhrbewegung eines Schweißdrahtes für das WIG-Schweißverfahren mit einem automatischen Drahtvortrieb, dadurch gekennzeichnet, daß die Vortriebseinrichtung (3) für die automatische Schweißdrahtzuführung in eine lineare Vor-Zurück-Bewegung versetzt wird, während gleichzeitig durch die Vortriebseinrichtung (3) eine kontinuierliche Vorschubbewegung des Schweißdrahtes (1) erfolgt, wodurch der Schweißdraht 1 in eine Pendelhubbewegung versetzt wird.

2. Verfahren nach Anspruch 1, dadurch gekennzeichnet, daß der Frequenzbereich der Pendelhubbewegung zwischen 100 und 1000 pro Minute liegt, wobei die Frequenz der Pendelhubbewegung vorzugsweise stufenlos verstellbar ist.

3. Verfahren nach Anspruch 1 oder 2, dadurch gekennzeichnet, daß die Vortriebsgeschwindigkeit des Schweißdrahtes 1 im Bereich von 0,5 bis 7 Meter pro Minute liegt.

4. Verfahren nach einem der Ansprüche 1 bis 3, dadurch gekennzeichnet, daß die lineare Vor-Zurück-Bewegung der Vortriebseinrichtung (3) durch einen separaten Exzenterantrieb hervorgerufen wird, wobei der Exzenterantrieb vorzugsweise variabel einstellbar ist.

5. Verfahren einem der Ansprüche 1 bis 4, dadurch gekennzeichnet, daß die Pendelhubbewegung des Schweißdrahtes (1) an der Austrittsöffnung (24) der Drahtzuführeinrichtung (20) mit einer weiteren Pendelbewegung quer zur Austrittsrichtung überlagert wird.

6. Verfahren einem der Ansprüche 1 bis 5, dadurch gekennzeichnet, daß die Abschmelzleistung des Schweißdrahtes durch Vorwärmen mit einer zweiten Stromquelle erhöht wird.

7. Vorrichtung zur Durchführung eines Verfahrens nach den Ansprüchen 1 bis 6 zur Steuerung der Drahtzufuhrbewegung eines Schweißdrahtes für die WIG-Schweißung, dadurch gekennzeichnet, daß das Gehäuse (5), in dem die Drahtvorschubeinrichtung (3) fixiert ist, und der Antriebsmotor der Drahtvorschubeinrichtung (3) unbeweglich auf einem Führungsschlitten (6) befestigt sind und daß ein separater Getriebemotor (12) über eine Exzenterscheibe (13) und eine Antriebsstange (10) den Führungsschlitten (6) in eine lineare Vor-Zurück-Bewegung versetzt.

8. Vorrichtung nach Anspruch 7, dadurch gekennzeichnet, daß der Führungsschlitten (6) aus einem Hochleistungskunststoff besteht.

9. Vorrichtung nach Anspruch 7 oder 8, dadurch gekennzeichnet, daß der Getriebemotor (12) und das Gehäuse (9) des Führungssschlittens (6) auf einer gemeinsamen Befestigungsplatte (25) montiert sind.

10. Vorrichtung nach Anspruch 7 bis 9, dadurch gekennzeichnet, daß unterhalb der Befestigungsplatte (25) eine Schwingungsdämpfungsplatte (15) montiert ist.

11. Vorrichtung nach einem der Ansprüche 7 bis 10, dadurch gekennzeichnet, daß der Angriffspunkt (14) der Antriebsstange (10) an der Exzenterscheibe (13) in einem Bereich von 0,5 bis 10 Millimeter, bevorzugt in einem Bereich von 2 bis 6 Millimeter vom Scheibenmittelpunkt versetzt variabel eingestellt wird.

12. Vorrichtung nach einem der Ansprüche 7 bis 11, dadurch gekennzeichnet, daß die Zuführung des Schweißdrahtes (1) durch das Brennerschlauchpaket und den Handgriff (19) geführt wird und mittig oberhalb des Brennerhalses austritt.
